# EUROPEAN PATENT SPECIFICATION

(11) **EP 3 225 554 B1**
(45) Date of publication and mention of the grant of the patent: **07.08.2019**
(21) Application number: 17162238.4
(22) Date of filing: 22.03.2017
(51) Int. Cl.: B64D 13/06

(54) **AIRCRAFT AIR CONDITIONING SYSTEM INCLUDING A THERMOELECTRIC DEVICE**
FLUGZEUGKLIMAANLAGENSYSTEM EINSCHLIESSLICH EINER THERMOELEKTRISCHEN VORRICHTUNG
SYSTÈME DE CLIMATISATION D'AÉRONEF COMPRENANT UN DISPOSITIF THERMOÉLECTRIQUE

(30) Priority: 31.03.2016 US 201615087347
(43) Date of publication of application: 04.10.2017
(73) Proprietor: Hamilton Sundstrand Corporation, Charlotte, NC 28217 (US)
(72) Inventor: ZYWIAK, Thomas M., Southwick, MA Massachusetts 01077 (US); ST. ROCK, Brian, Andover, CT Connecticut 06232 (US)
(74) Representative: Dehns

(56) References cited:
- JP-A- 2002 115 926
- JP-A- 2002 130 860

## Description

### BACKGROUND OF THE INVENTION

The present disclosure relates to an air conditioning system for an aircraft and, in particular, to using a thermoelectric device to regulate the air used to regulate temperature in an aircraft.

Conventional aircraft environmental control systems (ECSs) incorporate an air cycle machine, also referred to as an air cycle cooling machine, for use in cooling and dehumidifying air for an aircraft cabin. The air cycle machine may receive bleed air from a compressor that may have been passed through a primary heat exchanger (PEX).

In more detail, on aircraft powered by turbine engines, the air to be conditioned in the air cycle machine is typically air bled from one or more of compressor stages of the turbine engine. In conventional systems, this bleed air passes through the air cycle machine compressor where it is further compressed. The compressed air is passed through a heat exchanger (condenser) to cool the compressed air sufficiently to remove moisture and dehumidify the air. The dehumidified compressed air is expanded in a first turbine of the air cycle machine to both extract energy from the compressed air so as to drive the shaft and also to cool the expanded turbine exhaust air before it is supplied to the aircraft cabin as conditioned cooling air. The cooled expanded air serves as the cooling cross-flow in the condenser and is then may be further expanded in a second turbine before being provided to aircraft cabin.

JP 2002115926 discloses a cooling system for an aircraft. JP 2002130860 discloses an air conditioner utilizing a Peltier element.

### SUMMARY OF THE INVENTION

An environmental control system (ECS) for an aircraft according to claim 1 is disclosed. The ECS includes a primary heat exchanger configured to receive bleed air from a turbine compressor of the aircraft and a secondary heat exchanger having an input configured to receive a flow from the primary heat exchanger and a secondary heat exchanger output and that cools the flow received from the primary heat exchanger with RAM air. The ECS further includes a thermoelectric condensing device having an input in fluid communication with the output of the secondary heat exchanger and also having a thermoelectric condensing device output. The ECS does not include an air cycle machine that includes a turbine and a compressor.

Also disclosed is an aircraft that includes the environmental control system (ECS).

Additional features and advantages are realized through the techniques of the present disclosure. Other embodiments and aspects of the disclosure are described in detail herein. For a better understanding of the disclosure with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent by way of example only from the following detailed description taken in conjunction with the accompanying drawings in which:
FIG. 1 shows a high level block diagram an environmental control system (ECS) that includes an air cycle machine (ACM) according to the prior art.
FIG. 2 shows an example of an ECS that includes a thermoelectric condensing device and
FIG. 3 shows another example of an ECS that includes a thermoelectric condensing device according to the present invention.

### DETAILED DESCRIPTION OF THE INVENTION

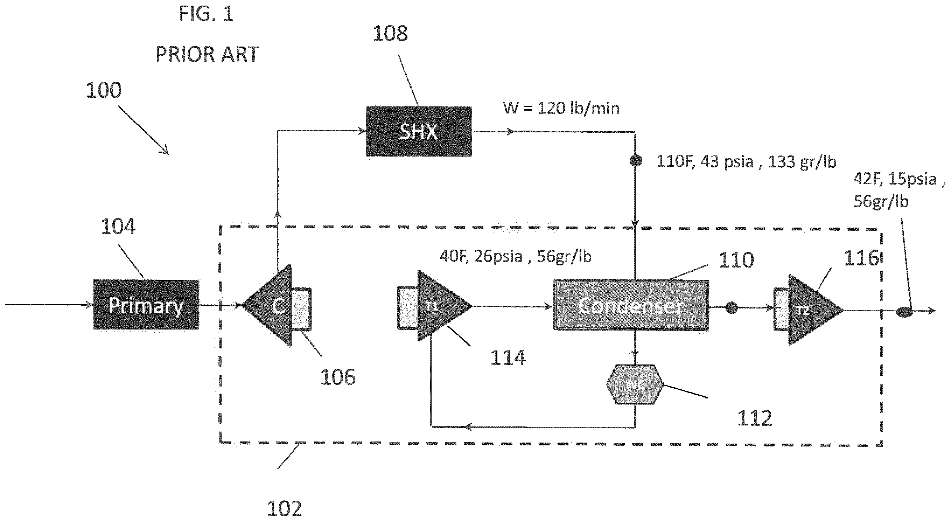

FIG. 1 shows a high level block diagram an ECS 100 that includes an air cycle ACM 102 according to the prior art. Hot air from a compressor is received at a primary heat exchanger (PHX) 104. The air is cooled in the PHX 104 by cross-flow from a ram air fan in some cases. After being cooled the air is provided to the ACM 102 and compressed by compressor 106. For example, on a hot day at sea level the compressor 106 causes the air pressure to be increased which, in turn, heats the air. The heated air enters a secondary heat exchanger (SHX) 108. Again, the SHX may cool the air by providing a flow across the input flow from a ram air fan. In the following, the input flow will refer to air that has passed through the PHX and the compressor 106. The cooled air is then passed through a condenser 110 that causes water vapor in the input flow to condense into water droplets and be removed through a separator 112. The water extracted by the separator 112 may be simply dumped overboard or may be sprayed into the ram-air intakes where the PHX 104 and SHX 108 are located to improve their cooling efficiency.

A first turbine 114 receives the de-humidified air and allows it to expand. The expansion both further cools the air and provides for rotation of the shaft (not shown) to which the compressor 106, the first turbine 114 and the second turbine 116 are all attached. The cooled air then is crossflowed back across the condenser 110 and to provide for cooling the condenser 110. Finally, the air may be further expanded in the second turbine 116 and then provided into the cabin. In FIG. 1, various example parameters of the input flow at various stages are shown by way of example. These values are not limiting but are examples and are incorporated into this specification as is set forth explicitly herein.

Embodiments herein allow for the removal of at least the first turbine 114 and the condenser 110. This may be accomplished by providing a thermoelectric condenser downstream of the SHX 108. The condenser includes a thermoelectric (TE) device. In one embodiment, the TE device is superlattice device. The TE device, when powered, "pumps" heat from the input flow to a location where the heat may be removed by, for example, a ram air flow and provides that heat to the ram air.

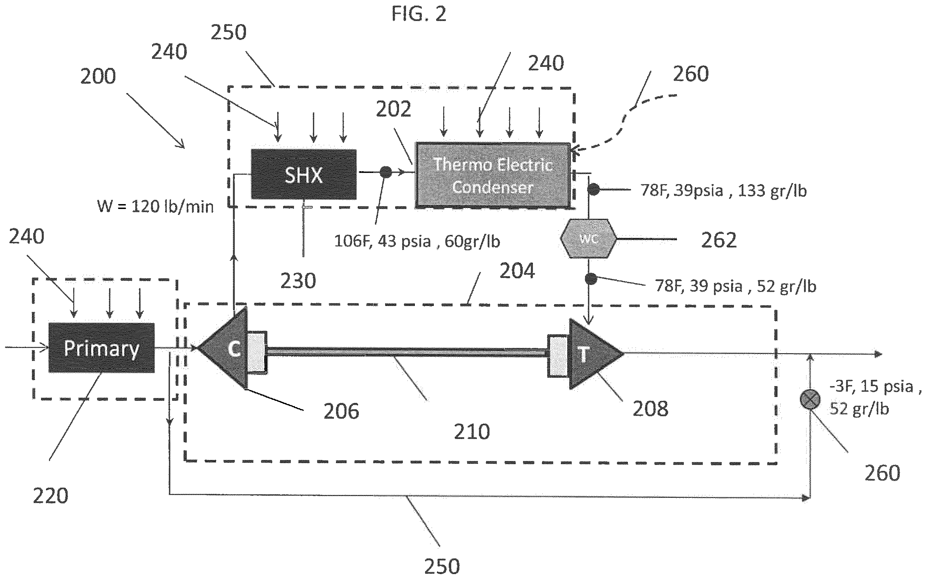

FIG. 2 shows an example of an ECS 200 that includes a thermoelectric condensing device (TECD) 202. In FIG. 2, various example parameters of the input flow at various stages are shown by way of example. These values are not limiting but are examples and are incorporated into this specification as is set forth explicitly herein.

The ECS 200 includes an ACM 204. In thisexample, the ACM 204 includes a compressor 206 and a turbine 208 connected to co-resident on a shaft 210. It shall be understood that expansion of a flow in the turbine 208 may provide rotational energy to drive the compressor 206 in one embodiment.

An incoming flow from a turbine (e.g., jet engine) may be passed through a PHX 220. Ram air (shown by arrows 240) may cool the received flow in a known manner. That same ram air may also be used to cool flows received by the SHX 230 and the TECD 202. As such, all are shown as being included in ram air channel as generally indicated by dashed boxes 250. It shall be understood that the exact orientation and arrangement of the PHX 220, the SHX 230 and the TECD 202 may be varied from that shown in FIG. 2. For instance, the SHX 230 and the TECD 202 could be in series or parallel and the PHX could be in front or behind either or both the SHX 230 and the TECD 202.

The air leaving the PHX 240 is compressed by compressor 206 and provided to the SHX where it is cooled. That air is then further cooled by the TECD 202. The heat is pumped from the flow where it is carried away by the ram air 240 due to application electrical power 260 to the TECD 202. Removal of the heat by the TECD 202 may cause the vapor in the flow to become liquid water droplets. The liquid water droplets are removed from the flow by cyclone 262. The dehumidified flow may then be expanded in turbine 208 of the ACM 204. If need, a bypass line 250 may be provided between the output of the PHX 240 to control the temperature of the flow before it is provided to the cabin and that bypass line 250 is controlled by a valve 260.

From time to time herein, an element may be described as being located in a fluid path between two elements. For example, the water cyclone 262 is fluid communication with the TECD 202 and the turbine 208 and is disposed in a fluid path between them.

In this version, the ram cooled TECD may allow for the omission of the first turbine 114 of FIG. 1. In addition, it may allow for the reduction of the ACM 240 outlet temperature to drop by up to 60%. In the illustrated example, the TECD 202 may cool the air at 2250 BTU/min (39 kW).

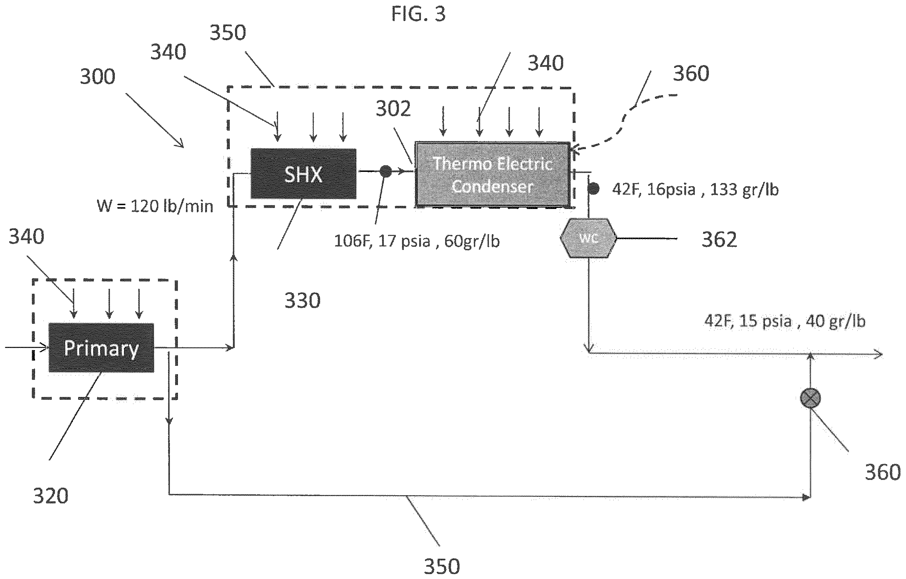

According to the invention, the ACM 204 may be eliminated in whole. For instance, in FIG. 3, the ECS 300 includes a thermoelectric condensing device (TECD) 302 that may be utilized in one embodiment. In FIG. 3, various example parameters of the input flow at various stages are shown by way of example. These values are not limiting but are examples and are incorporated into this specification as is set forth explicitly herein.

An incoming flow from a compressor (e.g., jet engine) may be passed through a PHX 320. Ram air (shown by arrows 340) may cool the received flow in a known manner. That same ram air may also be used to cool flows received by the SHX 330 and the TECD 302. As such, all are shown as being included in ram air channel as generally indicated by dashed boxes 350. It shall be understood that the exact orientation and arrangement of the PHX 320, the SHX 330 and the TECD 302 may be varied from that shown in FIG. 3. For instance, the SHX 330 and the TECD 302 could be in series or parallel and the PHX could be in front or behind either or both the SHX 330 and the TECD 302.

The air leaving the PHX 340 provided to the SHX where it is cooled. That air is then further cooled by the TECD 302. The heat is pumped from the flow where it is carried away by the ram air 340 due to application electrical power 360 to the TECD 302. Removal of the heat by the TECD 302 may cause the vapor in the flow to become droplets. The mist is removed from the flow by cyclone 362. If need, a bypass line 350 may be provided between the output of the PHX 240 to control the temperature of the flow before it is provided to the cabin and that bypass line 350 is controlled by a valve 360.

According to the invention, the ram cooled TECD allows for the omission of the first and second turbines 114, 116 of FIG. 1. In addition, the compressor is also omitted leading to an ECS that does not include an ACM. In the illustrated example, the TECD 302 may cool the air at 3530 BTU/min (62.2 kW).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

While the invention has been described in detail in connection with only a limited number of embodiments, it should be readily understood that the invention is not limited to such disclosed embodiments. Rather, the invention can be modified to incorporate any number of variations, alterations or substitutions not heretofore described, but which are commensurate with the scope of the invention.

Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An environmental control system (ECS) for an aircraft, the ECS including:
a primary heat exchanger (320) configured to receive bleed air from a turbine compressor of the aircraft;
a secondary heat exchanger (330) having an input configured to receive a flow from the primary heat exchanger and a secondary heat exchanger output and that cools the flow received from the primary heat exchanger with RAM air (340); and
a thermoelectric condensing device (302) having an input in fluid communication with the output of the secondary heat exchanger and also having a thermoelectric condensing device output; **characterised in that** the ECS does not include an air cycle machine that includes a turbine and a compressor.

2. The ECS of claim 1, further comprising:
a water cyclone (362) in fluid communication with the thermoelectric condensing device outlet.

3. The ECS of claim 1, wherein at least one of the primary heat exchanger (320) and the thermoelectric condensing device (302) are disposed in a ram air channel of the aircraft.

4. The ECS of claim 1, wherein the primary heat exchanger (320), the secondary heat exchanger (330) and the thermoelectric condensing device (302) are disposed in a ram air channel of the aircraft.

5. An aircraft comprising the ECS of any of the preceding claims.

6. The aircraft of claim 5 further comprising: the turbine compressor.

## Patentansprüche

1. Umgebungssteuersystem (ECS) für ein Flugzeug, wobei das ECS Folgendes beinhaltet:
einen primären Wärmetauscher (320), der konfiguriert ist, um Zapfluft von einem Turbinenverdichter des Flugzeugs zu empfangen;
einen sekundären Wärmetauscher (330), der einen Eingang, der konfiguriert ist, um einen Fluss von dem primären Wärmetauscher zu empfangen, und einen Ausgang des sekundären Wärmetauschers aufweist, und der den von dem primären Wärmetauscher empfangenen Fluss mit Stauluft (340) kühlt; und
eine thermoelektrische Kondensationsvorrichtung (302), die einen Eingang in Fluidkommunikation mit dem Ausgang des sekundären Wärmetauschers aufweist und auch einen Ausgang der thermoelektrischen Kondensationsvorrichtung aufweist;
**dadurch gekennzeichnet, dass** das ECS keine Luftzyklusmaschine beinhaltet, die einen Turbine und einen Verdichter beinhaltet.

2. ECS nach Anspruch 1, ferner umfassend:
einen Wasserzyklon (362) in Fluidkommunikation mit dem Auslass der thermoelektrischen Kondensationsvorrichtung.

3. ECS nach Anspruch 1, wobei zumindest eines von dem primären Wärmetauscher (320) und der thermoelektrischen Kondensationsvorrichtung (302) in einem Stauluftkanal des Flugzeugs angeordnet ist.

4. ECS nach Anspruch 1, wobei der primäre Wärmetauscher (320), der sekundäre Wärmetauscher (330) und die thermoelektrische Kondensationsvorrichtung (302) in einem Stauluftkanal des Flugzeugs angeordnet sind.

5. Flugzeug, umfassend das ECS nach einem der vorhergehenden Ansprüche.

6. Flugzeug nach Anspruch 5, ferner umfassend:
den Turbinenverdichter.

## Revendications

1. Système de régulation climatique (ECS) d'un aéronef, l'ECS comprenant :
un échangeur thermique principal (320) configuré pour recevoir l'air de purge provenant d'un compresseur de turbine de l'aéronef ;
un échangeur thermique secondaire (330) comportant une entrée configurée pour recevoir un flux provenant de l'échangeur thermique principal et une sortie d'échangeur thermique secondaire et qui refroidit le flux reçu en provenance de l'échangeur thermique principal avec de l'air dynamique (340) ; et
un dispositif de condensation thermoélectrique (302) comportant une entrée en communication fluidique avec la sortie de l'échangeur thermique secondaire et comportant également une sortie de dispositif de condensation thermoélectrique ;
**caractérisé en ce que** l'ECS ne comprend pas de groupe turbo-refroidisseur incluant une turbine et un compresseur.

2. ECS selon la revendication 1, comprenant en outre :
un hydro-cyclone (362) en communication fluidique avec la sortie du dispositif de condensation thermoélectrique.

3. ECS selon la revendication 1, dans lequel au moins l'un de l'échangeur thermique principal (320) et du dispositif de condensation thermoélectrique (302) est disposé dans un canal d'air dynamique de l'aéronef.

4. ECS selon la revendication 1, dans lequel l'échangeur thermique principal (320), l'échangeur thermique secondaire (330) et le dispositif de condensation thermoélectrique (302) sont disposés dans un canal d'air dynamique de l'aéronef.

5. Aéronef comprenant l'ECS selon l'une quelconque des revendications précédentes.

6. Aéronef selon la revendication 5 comprenant en outre :
le compresseur de turbine.
